# EUROPEAN PATENT APPLICATION

(11) **EP 2 009 332 A2**
(43) Date of publication of application: **31.12.2008**
(21) Application number: 08010544.8
(22) Date of filing: 10.06.2008
(51) Int. Cl.: F16J 15/32, F01P 3/18

(54) **Sealing member**

(30) Priority: 28.06.2007 JP 2007170181
(71) Applicant: TOKAI RUBBER INDUSTRIES, LTD., Komaki-shi, Aichi-ken, 485-8550 (JP)
(72) Inventor: Higashi, Manabu, Aichi 485-8550 (JP)
(74) Representative: Kuhnen & Wacker

(57) **Abstract**

A sealing member according to an embodiment of the present invention seals a gap between a first member and a second member which is displaceable from a farthest state to a closest state with respect to the first member. The sealing member includes a first seal formed of porous urethane foam which extends in a direction from the first member to the second member, and a second seal formed of porous urethane foam which extends in a direction from the second member to the first member. Between the first seal and the second seal, an overlapping section in which the first seal and the second seal overlap in a direction intersecting with a stroke direction at least in the farthest state is arranged. The first seal and the second seal are approximately in contact. The first seal and the second seal are arranged such that their protruding ends do not come into pressure contact in the stroke direction with each other in the closest state.

## Description

### BACKGROUND OF THE INVENTION

### 1. Field of the Invention

The present invention relates to a sealing member arranged at, for example, a gap between a cabin and a radiator of a tilt-cab vehicle.

### 2. Description of the Related Art

A sealing member of Japanese Patent Application Publication No. JP-A-2005-262961 is arranged at a gap between a cabin and a radiator of a tilt-cab vehicle. The sealing member prevents engine heat from being transmitted to the front of the radiator through the gap between the cabin and the radiator. The sealing member extends upward from the radiator. Specifically, the bottom of the sealing member is secured to the upper surface of the radiator with a bolt. On the other hand, the protruding end of the sealing member is in elastic contact with a floor of the cabin.

The cabin and the radiator are displaceable independent from each other. Therefore, while driving, for example, the gap between the cabin and the radiator changes irregularly. An elastic deformation of the sealing member allows the gap changing irregularly to be sealed.

### SUMMARY OF THE INVENTION

It is necessary for a sealing member to constantly seal a gap between a cabin and a radiator, whether the gap be large or small. However, in the case where a difference between when the gap is large and when the gap is small is large, i.e., a gap change is large, it is difficult for the sealing member to adjust with the gap change.

That is, if the sealing member is designed to adjust with a large gap, the length of the sealing member in a cabin-radiator direction (length in a vertical direction) becomes large. Therefore, when the gap becomes small, the protruding end of the sealing member comes into excessive pressure contact with a floor of the cabin. Thus, the sealing member is bent, whereby the durability of the sealing member decreases.

A sealing member of the present invention has been completed in view of the problem described above. Thus, the present invention has an object of providing the sealing member which is less prone to decrease in durability even in the case where the gap change between two adjacent members is large.

(1) In order to solve the problem described above, a sealing member according to an aspect of the present invention seals a gap between a first member and a second member, displaceable by a stroke from a farthest state to a closest state with respect to the first member, and includes a first seal formed of porous urethane foam which extends in a direction from the first member to the second member, and a second seal formed of the porous urethane foam which extends in a direction from the second member to the first member. In the sealing member, the first seal and the second seal are arranged with an overlapping section therebetween in which the first seal and the second seal overlap in a direction intersecting with a stroke direction at least in the farthest state, the first seal and the second seal are approximately in contact in the overlapping section, and the first seal and the second seal are arranged such that a protruding end of the first seal and a protruding end of the second seal do not come into pressure contact in the stroke direction in the closest state.

The phrase "approximately in contact" refers to a state where the first seal and the second seal are in contact, or are arranged with a small gap therebetween. The sealing member of the present aspect includes the first seal and the second seal. The overlapping section is arranged between the first seal and the second seal at least in the farthest state. The overlapping section is formed by an overlap of the first seal and the second seal in a direction intersecting with the stroke direction (direction in which the first member and the second member are relatively displaced to become distant or close). The first seal and the second seal are approximately in contact in the overlapping section.

In the sealing member of the present aspect, the overlapping section is arranged in the farthest state. Therefore, in the farthest state, an object to be sealed (for example, sound and heat) can reliably be sealed. In the closest state, the protruding end of the first seal and the protruding end of the second seal do not come into pressure contact in the stroke direction. Therefore, the first seal and the second seal are unlikely to bend. Thus, the durability of the sealing member is less prone to decrease. In addition, the first seal and the second seal are approximately in contact in the overlapping section. Therefore, the first seal and the second seal have excellent sealing performance.

(2) The sealing member with the configuration of (1) described above preferably has a configuration in which the first seal and the second seal are in contact at respective contact surfaces in the overlapping section.

In this configuration, the first seal and the second seal are in contact. Therefore, the gap between the first member and the second member (hereinafter appropriately referred to as a "gap between the members") can more reliably be sealed.

(3) The sealing member with the configuration of (2) described above preferably has a configuration in which at least one of a pair of the contact surfaces extends in a direction intersecting with the stroke direction.

In this configuration, one of the contact surfaces acts as a sliding guide of the other of the contact surfaces when the width of the gap between the members becomes small. The first seal and the second seal are applied with a load, which causes deformation of the first seal and the second seal in opposite directions, via the respective contact surfaces. Therefore, the pressure contact of the protruding end of the first seal and the protruding end of the second seal in the closest state can reliably be prevented.

(4) The sealing member with the configuration of (3) described above preferably has a configuration in which the pair of contact surfaces both extend in a direction intersecting with the stroke direction, and the first seal and the second seal extend alternately in the closest state.

In this configuration, the first seal and the second seal are arranged alternately in the closest state. Therefore, the pressure contact of the protruding end of the first seal and the protruding end of the second seal in the closest state can more reliably be prevented.

In this configuration, the first seal and the second seal are curved in opposite directions. Therefore, a curvature radius of the curve can be large compared to a case where the first seal and the second seal are curved in the same direction, which means the curve is gentler.

(5) The sealing member with the configuration of (2) described above preferably has a configuration in which at least a part of at least one of the pair of the contact surfaces has a curved surface shape. With this configuration, a sliding resistance when the contact surfaces come in sliding contact with each other can be reduced compared to a case where a part of the contact surface is angular.

(6) The sealing member with the configuration of (1) described above preferably has a configuration in which the first seal and the second seal are arranged with a gap therebetween in the overlapping section, and a minimum width of the gap is greater than 0 mm and smaller than 5 mm.

The minimum width of the gap between the first seal and the second seal (hereinafter appropriately referred to as a "gap between the seals") is greater than 0 mm, because the first seal and the second seal relatively slide in the case where the minimum width is 0 mm, whereby the durability likely decreases due to wear. The minimum width of the gap between the seals is smaller than 5 mm, because the gap between the seals becomes large in the case where the minimum width is greater than or equal to 5 mm, whereby it becomes difficult to seal the gap between the members.

(7) The sealing member with the configuration of (6) described above preferably has a configuration in which the protruding end of the first seal includes a first extending section extending in a direction toward the second seal, the protruding end of the second seal includes a second extending section extending in a direction toward the first seal; and the first seal and the second seal seal the gap between the first member and the second member in a zigzag shape.

In this configuration, the first seal and the second seal seal the gap between the members in the zigzag shape. Therefore, an object to be sealed (for example, sound and heat) can be prevented from leaking through the gap between the seals.

(8) The sealing member with the configuration of (1) described above preferably has a configuration in which the first seal and the second seal have identical shapes. With this configuration, the first seal and the second seal can be manufactured with an identical mold. Therefore, the manufacturing cost of the first seal and the second seal can be reduced.

(9) The sealing member with the configuration of (1) described above preferably has a configuration further including a first attachment tool which secures the first seal to the first member, and a second attachment tool which secures the second seal to the second member. In the sealing member, at least one of the first attachment tool and the second attachment tool preferably extend in approximately an orthogonal direction with respect to the stroke direction.

With this configuration, a deformation space of the first seal increases in the case where, for example, the first attachment tool extends approximately in the orthogonal direction with respect to the stroke direction, compared to a case where the first attachment tool extends in the stroke direction. The same can be said for the second attachment tool. Therefore, even in the case where a change of the gap between the members is large, the deformation of the first seal or the second seal can sufficiently adjust with the change of the gap between the members.

(10) The sealing member with the configuration of (1) described above preferably has a configuration in which the first member is a cabin of a tilt-cab vehicle, and the second member is a radiator arranged below the cabin.

In other words, this configuration uses the sealing member of an aspect of the present invention for a radiator seal of a tilt-cab vehicle. With this configuration, hot air due to a heat exchange of the radiator and heat of the engine itself can be prevented from re-flowing in the radiator.

According to some aspects of the present invention, the sealing member which is less prone to decrease in durability can be provided even in the case where the gap change between the first member and the second member is large.

### BRIEF DESCRIPTION OF THE DRAWINGS

FIG. 1 is a transparent side view of a tilt-cab truck in which a sealing member of a first embodiment is arranged;
FIG. 2A is a sectional view of the sealing member in a farthest state;
FIG. 2B is a sectional view of the sealing member in a closest state;
FIG. 3A is a sectional view of a sealing member of a second embodiment in a farthest state;
FIG. 3B is a sectional view of the sealing member in a closest state; and
FIG. 4 is a transparent front view of a tilt-cab truck in which a sealing member of a third embodiment is arranged.

### DETAILED DESCRIPTION OF THE PREFERRED EMBODIMENTS

Embodiments of a sealing member of the present invention for a radiator seal of a tilt-cab truck will now be described.

### First Embodiment

### Arrangement of Sealing Member

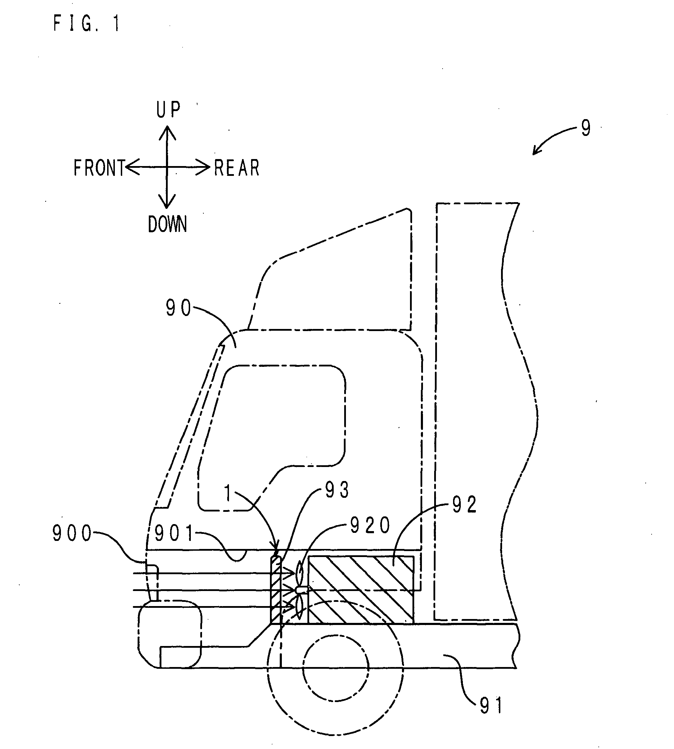

First, an arrangement of the sealing member of this embodiment is described. FIG. 1 shows a transparent side view of a tilt-cab truck in which the sealing member of this embodiment is arranged. As shown in FIG. 1, a tilt-cab truck 9 includes a cabin 90, a chassis frame 91, an engine 92, a radiator 93, and a sealing member 1.

The engine 92 and the radiator 93 are mounted between a pair of the left and right chassis frames 91. The radiator 93 is arranged in front of the engine 92. On the front surface of the engine 92, a cooling fan 920 is arranged. The cabin 90 is arranged above the engine 92 and the radiator 93. The cabin 90 is displaced irregularly in vertical directions with respect to the engine 92 and the radiator 93. On the lower front surface of the cabin 90, a lattice grill 900 is arranged. The grill 900 and the radiator 93 are aligned in the front-rear direction. The sealing member 1 is set between the upper surface of the radiator 93 and a floor of the cabin 90. The sealing member 1 seals a gap between the upper surface of the radiator 93 and the floor of the cabin 90.

### Configuration of Sealing Member

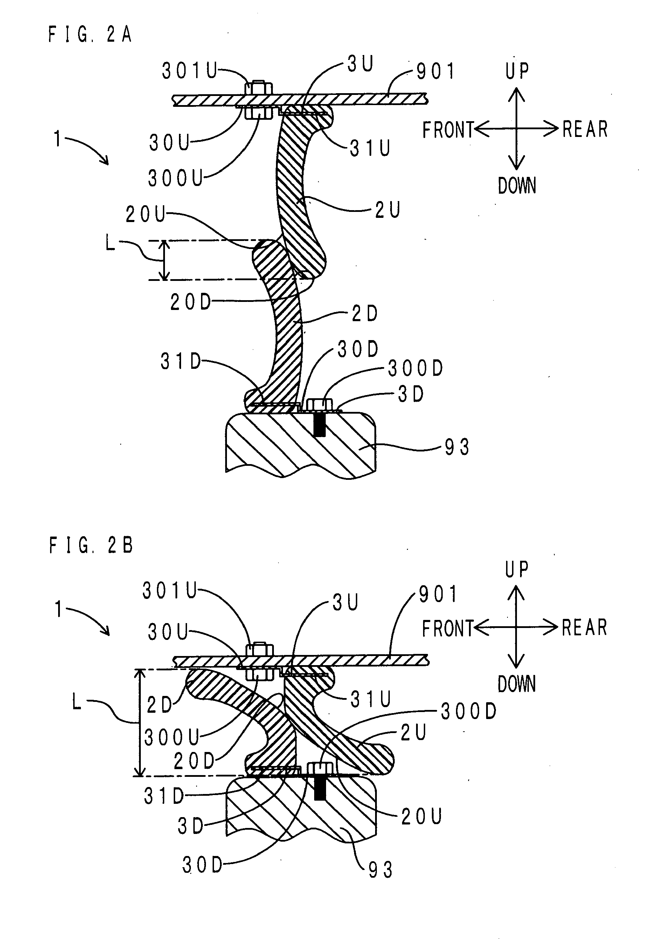

Next, a configuration of the sealing member of this embodiment is described. FIGs. 2A and 2B show sectional views of the sealing member of this embodiment. FIG. 2A shows a farthest state, and FIG. 2B shows a closest state. As shown in FIGs. 2A and 2B, the sealing member 1 of this embodiment includes a first seal 2U, a second seal 2D, a first attachment tool 3U, and a second attachment tool 3D.

The first attachment tool 3U is formed of metal, and has a strip shape. The first attachment tool 3U extends in the front-rear direction. That is, the first attachment tool 3U extends in an orthogonal direction with respect to a stroke direction (vertical direction). The first attachment tool 3U includes a securing section 30U and a burial section 31U. The securing section 30U is secured to the lower surface of a floor 901 of the cabin with a bolt 300U and a nut 301U. The burial section 31U is provided behind the securing section 30U continuously with a step therebetween.

The first seal 2U is formed of porous urethane foam, and has a rib shape. The first seal 2U extends in a horizontal direction for a length of the radiator 93 described below in the horizontal direction. The burial section 31 U is buried at the bottom of the first seal 2U. In other words, the first seal 2U extends downward from the burial section 31 U, i.e., from the first attachment tool 3U. On the front surface of the first seal 2U, a contact surface 20U is arranged. The contact surface 20U has a curved surface shape bending toward the front in an arc shape.

The second attachment tool 3D is identical with the first attachment tool 3U. The second attachment tool 3D is arranged in a state where the first attachment tool 3U is rotated 180° in the vertical direction. The second attachment tool 3D is arranged in a position slightly misaligned rearward with respect to the first attachment tool 3U. The second attachment tool 3D extends in the front-rear direction. That is, the second attachment tool 3D extends in the orthogonal direction with respect to the stroke direction (vertical direction). The second attachment tool 3D includes a securing section 30D and a burial section 31D. The securing section 30D is secured to the upper surface of the radiator 93 with a bolt 300D. The burial section 31D is provided in front of the securing section 30D continuously with a step therebetween.

The second seal 2D is identical with the first seal 2U. The second seal 2D is arranged in a state where the first seal 2U is rotated 180° in the vertical direction. The second seal 2D extends in the horizontal direction for the length of the radiator 93 in the horizontal direction. The burial section 31D is buried at the bottom of the second seal 2D. In other words, the second seal 2D extends upward from the burial section 31D, i.e., from the second attachment tool 3D. On the rear surface of the second seal 2D, a contact surface 20D is arranged. The contact surface 20D has a curved surface shape bending toward the rear in an arc shape. The contact surface 20D and the contact surface 20U are in sliding contact. Between the first seal 2U and the second seal 2D, an overlapping section L in which the first seal 2U and the second seal 2D overlap in the front-rear direction is arranged.

### Movement of Sealing Member

Next, a movement of the sealing member of this embodiment is described. As shown in FIG. 1, air is introduced to the tilt-cab truck 9 from the front via the grill 900. The introduced air is sucked in by the cooling fan 920, and exchanges heat with a coolant (not shown) flowing in the radiator 93. The hot air due to the heat exchange passes through the surrounding area of the engine 92 and is discharged outside the car from a discharge opening (not shown).

However, there are cases where the air after the heat exchange or the air which has passed through the surrounding area of the engine 92 moves forward along the lower surface of the floor 901 of the cabin 90. The air is comparatively hot. Therefore, if the hot air flows in the radiator 93 again, the heat exchange performance of the radiator 93 decreases.

The sealing member 1 prevents the hot air from moving to the front of the radiator 93 with the gap between the cabin 90 and the radiator 93. The cabin 90 and the radiator 93 are relatively displaced irregularly by a stroke from the farthest state shown in FIG. 2A to the closest state shown in FIG. 2B.

In the farthest state, the first seal 2U and the second seal 2D extend approximately in the vertical direction. The lower end of the contact surface 20U and the upper end of the contact surface 20D are in elastic contact. The elastic contact allows the gap between the cabin 90 and the radiator 93 to be sealed.

In contrast with the farthest state, when the cabin 90 and the radiator 93 become relatively contiguous, the contact surface 20U and the contact surface 20D come into sliding contact. The sliding contact allows the gap between the cabin 90 and the radiator 93 to be constantly sealed even though the gap width changes.

The contact surface 20U extends downward while being curved toward the rear. On the contrary, the contact surface 20D extends upward while being curved toward the front. Therefore, the contact surface 20U is applied with a rearward component force via a sliding contact boundary surface. On the contrary, the contact surface 20D is applied with a forward component force. Thus, the first seal 2U is deformed such that the lower end is curved toward the rear by the sliding contact of the contact surface 20U and the contact surface 20D. On the contrary, the second seal 2D is deformed such that the upper end is curved toward the front.

In the closest state, the second seal 2D and the first seal 2U are arranged alternately in the front-rear direction. The lower end of the first seal 2U relatively descends to the vicinity of the upper surface of the radiator 93. On the contrary, the upper end of the second seal 2D relatively ascends to the vicinity of the lower surface of the floor 901 of the cabin 90. The middle section of the contact surface 20U and the middle section of the contact surface 20D are in elastic contact. The lower end of the first seal 2U is contiguous with the upper surface of the radiator 93, the upper end of the second seal 2D is contiguous with the lower surface of the floor 901, and the contact surface 20U and the contact surface 20D are in elastic contact, whereby the gap between the cabin 90 and the radiator 93 is sealed.

### Advantageous Effect

Next, an advantageous effect of the sealing member of this embodiment is described. With the sealing member 1 of this embodiment, the overlapping section L is arranged in the farthest state as shown in FIG. 2A. Therefore, in the farthest state, the hot air can reliably be prevented from moving to the front of the radiator 93. As shown in FIG. 2B, in the closest state, the lower end of the first seal 2U and the upper end of the second seal 2D do not come into pressure contact in the vertical direction. Therefore, the first seal 2U and the second seal 2D are unlikely to bend. Thus, the durability of the sealing member 1 is less prone to decrease.

With the sealing member 1 of this embodiment, the first seal 2U and the second seal 2D are in contact. Therefore, the gap between the cabin 90 and the radiator 93 can more reliably be sealed.

With the sealing member 1 of this embodiment, one of the contact surfaces 20U and 20D acts as a sliding guide of the other of the contact surfaces 20D and 20U when the width of the gap between the cabin 90 and the radiator 93 becomes small. The first seal 2U and the second seal 2D are applied with a load, which causes deformation of the first seal 2U and the second seal 2D in opposite directions, via the respective contact surfaces 20U and 20D. Therefore, the pressure contact of the first seal 2U and the second seal 2D in the closest state can more reliably be prevented.

With the sealing member 1 of this embodiment, the first seal 2U and the second seal 2D are arranged alternately in the closest state. Therefore, the pressure contact of the first seal 2U and the second seal 2D in the closest state can more reliably be prevented.

With the sealing member 1 of this embodiment, the first seal 2U and the second seal 2D are curved in opposite directions. Therefore, a curvature radius of the curve can be large compared to a case where the first seal 2U and the second seal 2D are curved in the same direction. That is, the curve is gentler.

With the sealing member 1 of this embodiment, a sliding resistance when the contact surfaces 20U and 20D come in sliding contact with each other can be reduced compared to a case where the contact surfaces 20U and 20D are angular.

With the sealing member 1 of this embodiment, the first seal 2U and the second seal 2D are the same components. Therefore, the manufacturing cost of the first seal 2U and the second seal 2D can be reduced by sharing the common parts. The first attachment tool 3U and the second attachment tool 3D are the same components. The manufacturing cost of the first attachment tool 3U and the second attachment tool 3D can be reduced by sharing the common parts.

With the sealing member 1 of this embodiment, the first attachment tool 3U and the second attachment tool 3D extend in the orthogonal direction (front-rear direction) with respect to the stroke direction (vertical direction). Therefore, a deformation space of the first seal 2U and the second seal 2D increases compared to a case where the first attachment tool 3U and the second attachment tool 3D extend in the stroke direction. Therefore, even in the case where the change of the gap between the cabin 90 and the radiator 93 is large, the deformation of the first seal 2U and the second seal 2D can sufficiently adjust with the change of the gap between the cabin 90 and the radiator 93.

### Second Embodiment

The difference between a sealing member of this embodiment and the sealing member of the first embodiment is that the first seal and the second seal are not in contact. Thus, only the difference will be described.

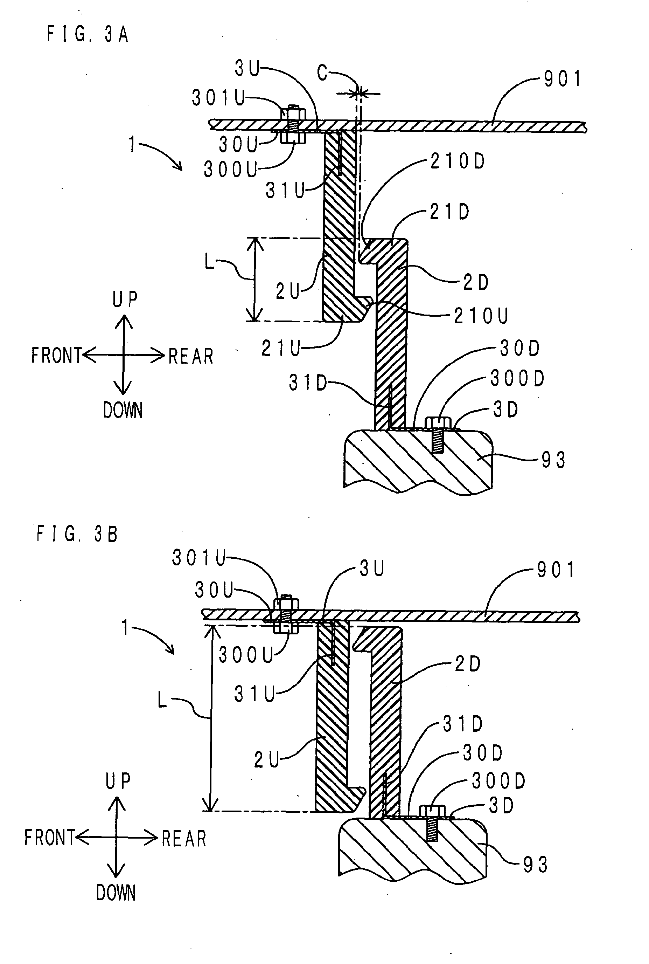

FIGs. 3A and 3B show sectional views of the sealing member of this embodiment. FIG. 3A shows the farthest state, and FIG 3B shows the closest state. Note that components corresponding to those in FIGs. 2A and 2B are denoted by the same reference symbols.

The first attachment tool 3U includes a securing section 30U and a burial section 31U. The securing section 30U is secured to the lower surface of the floor 901 of the cabin with the bolt 300U and the nut 301U. The burial section 31U protrudes downward from the rear end of the securing section 30U. The first seal 2U is formed of porous urethane foam, and has a rib shape. From a lower end 21 U of the first seal 2U, a first extending section 210U protrudes toward the rear.

The second attachment tool 3D is identical with the first attachment tool 3U. The second attachment tool 3D is arranged in a state where the first attachment tool 3U is rotated 180° in the vertical direction. The second attachment tool 3D includes the securing section 30D and the burial section 31D. The securing section 30D is secured to the upper surface of the radiator 93 with the bolt 300D. The burial section 31D protrudes upward from the front end of the securing section 30D.

The second seal 2D is identical with the first seal 2U. The second seal 2D is arranged in a state where the first seal 2U is rotated 180° in the vertical direction. From an upper end 2 1 D of the second seal 2D, a second extending section 210D protrudes toward the front. The first seal 2U and the second seal 2D are not in contact. That is, the first seal 2U and the second seal 2D are adjacent with a gap C having a minimum width of 3 mm therebetween.

The sealing member of this embodiment has an advantageous effect similar to that of the sealing member of the first embodiment for parts which share a common configuration. With the sealing member 1 of this embodiment, the first seal 2U and the second seal 2D are adjacent with the gap C having the minimum width of 3 mm therebetween. Therefore, the first seal 2U and the second seal 2D are less prone to come into sliding contact. Thus, the first seal 2U and the second seal 2D are less prone to be worn. In addition, the gap between the cabin 90 and the radiator 93 can reliably be sealed to an extent that the hot air does not leak.

With the sealing member 1 of this embodiment, the first seal 2U and the second seal 2D seal the gap between the cabin 90 and the radiator 93 in a zigzag shape. Therefore, the hot air can be prevented from leaking with the gap between the first seal 2U and the second seal 2D.

### Third Embodiment

The difference between a sealing member of this embodiment and the sealing member of the first embodiment is that the sealing member is arranged not only on the upper surface of the radiator but also on the side surface of the radiator. Thus, only the difference will be described.

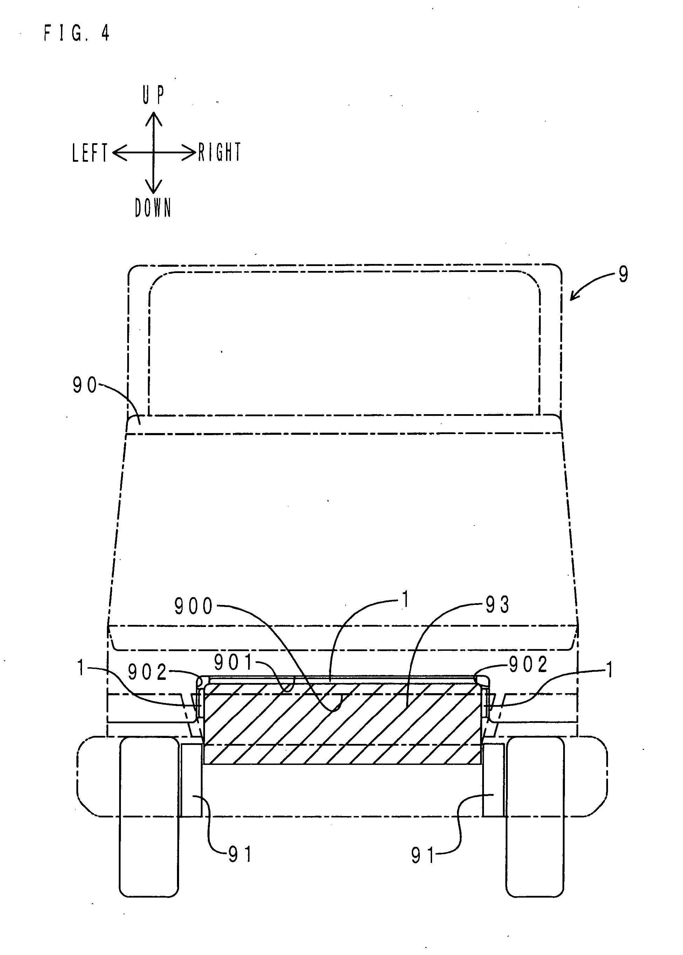

FIG. 4 shows a transparent front view of a tilt-cab truck in which the sealing member of this embodiment is arranged. Note that components corresponding to those in FIG. 1 are denoted by the same reference symbols. As shown in FIG. 4, the sealing member 1 is arranged at the gap between a side wall 902 of the cabin 90 and the side surface of the radiator 93, in addition to the gap between the floor 901 of the cabin 90 and an upper surface the radiator 93. That is, a total of three sealing members 1 are arranged.

The sealing member of this embodiment has an advantageous effect similar to that of the sealing member of the first embodiment for parts which share a common configuration. With the sealing member 1 of this embodiment, the gap between the side wall 902 of the cabin 90 and the side surface of the radiator 93 can reliably be sealed even in the case where the change of the gap width is large.

According to Japanese Patent Application Publication No. JP-A-2005-262961, the sealing member, which has a C shape with an opening facing downward when seen from the front, extends from the left surface to the right surface via the upper surface of the radiator. However, in the case of the sealing member of the Japanese Patent Application Publication No. JP-A-2005-262961, the load is concentrated in an angular section (boundary section between the upper surface and the left and right surfaces) in the closest state. Therefore, it is necessary that a separate measure be taken such as forming a slit in the angular section. In this regard, the three sealing members 1 are independent from each other in this embodiment. Therefore, the measure for the angular section is unnecessary.

### Modifications

Embodiments of the sealing member of the present invention is described above. However, the embodiment is not limited to the embodiments described above. Various variations and modifications available to those skilled in the art may also be made.

For example, although the first attachment tool 3U and the second attachment tool 3D are misaligned in the front-rear direction in the embodiments described above, the first attachment tool 3U and the second attachment tool 3D may also not be misaligned. Although the first seal 2U and the second seal 2D are curved in opposite directions as shown in FIG. 2B in the first embodiment described above, the first seal 2U and the second seal 2D may also be curved in the same direction.

Although the sealing member of the present invention is used for a radiator seal in the embodiments described above, the sealing member may also be used for a seal for a gap between the cabin 90 and the chassis frame 91 of the tilt-cab truck. The sealing member may also be used for a seal for a gap between an engine room and an engine hood.

## Claims

1. A sealing member which seals a gap between a first member and a second member which is displaceable by a stroke from a farthest state to a closest state with respect to the first member, **characterized in that** said sealing member comprises:
a first seal formed of porous urethane foam, the first seal extending in a direction from the first member to the second member; and
a second seal formed of the porous urethane foam, the second seal extending in a direction from the second member to the first member; wherein
the first seal and the second seal are arranged with an overlapping section therebetween in which the first seal and the second seal overlap in a direction intersecting with a stroke direction at least in the farthest state;
the first seal and the second seal are approximately in contact in the overlapping section; and
the first seal and the second seal are arranged such that a protruding end of the first seal and a protruding end of the second seal do not come into pressure contact in the stroke direction in the closest state.

2. The sealing member according to claim 1, wherein the first seal and the second seal are in contact at respective contact surfaces in the overlapping section.

3. The sealing member according to claim 2, wherein at least one of a pair of the contact surfaces extends in a direction intersecting with the stroke direction.

4. The sealing member according to claim 3, wherein the pair of contact surfaces both extend in a direction intersecting with the stroke direction, and the first seal and the second seal extend alternately in the closest state.

5. The sealing member according to any one of claims 2-4, wherein at least a part of at least one of the pair of the contact surfaces has a curved surface shape.

6. The sealing member according to claim 1, wherein the first seal and the second seal are arranged with a gap therebetween in the overlapping section, and a minimum width of the gap is greater than 0 mm and smaller than 5 mm.

7. The sealing member according to claim 6, wherein the protruding end of the first seal includes a first extending section extending in a direction toward the second seal, the protruding end of the second seal includes a second extending section extending in a direction toward the first seal, and the first seal and the second seal seal the gap between the first member and the second member in a zigzag shape.

8. The sealing member according to any one of claims 1-7, wherein the first seal and the second seal have identical shapes.

9. The sealing member according to any one of claims 1-8 further comprising:
a first attachment tool securing the first seal to the first member; and
a second attachment tool securing the second seal to the second member; wherein
at least one of the first attachment tool and the second attachment tool extend in approximately an orthogonal direction with respect to the stroke direction.

10. The sealing member according to any one of claims 1-9, wherein the first member is a cabin of a tilt-cab vehicle, and the second member is a radiator arranged below the cabin.
